# EUROPÄISCHE PATENTSCHRIFT

(11) **EP 1 621 483 B1**
(45) Veröffentlichungstag und Bekanntmachung des Hinweises auf die Patenterteilung: **28.12.2011**
(21) Anmeldenummer: 05105459.1
(22) Anmeldetag: 21.06.2005
(51) Int. Cl.: B65G 1/137

(54) **Vorrichtung zum Kommissionieren von Waren in einem Warenlager**
Device for the commissioning of goods in a warehouse
Dispositif pour la préparation de commandes des marchandises dans un magasin de stockage

(30) Priorität: 23.07.2004 DE 102004035820
(43) Veröffentlichungstag der Anmeldung: 01.02.2006
(73) Patentinhaber: Dematic GmbH, 63073 Offenbach (DE)
(72) Erfinder: Jungbluth, Volker, 63500 Seligenstadt (DE)
(74) Vertreter: Moser & Götze

(56) Entgegenhaltungen:
- EP-A- 1 136 395
- DE-U1- 9 404 044

## Beschreibung

Die Erfindung betrifft eine Vorrichtung zum Kommissionieren von Waren in einem Warenlager, insbesondere einem Hochregallager, mit Hilfe eines entlang einer Regalzeile verfahrbaren Flurfördermittels, auf dem von einem mitfahrenden Kommissionierer Waren auftragsgebunden aus Artikelbehältern in Kommissionierbehälter zusammenstellbar sind, wobei das Flurfördermittel als Kommissionierplattform ausgebildet ist, auf der ein Kommissionierarbeitsplatz installiert ist.

Steigende Anforderungen hinsichtlich der Leistung an Kommissionierarbeitsplätzen stoßen an die Grenzen der heute angewandten Kommissioniertechnik. Die zumeist manuell ausgebildeten Arbeitsplätze befinden sich im Umfeld einer hochtechnisierten Anlage. Dennoch werden nach den bestehenden Gegebenheiten die Grenzleistungen meist nicht durch den Bediener, sondern durch die Systemgestaltung und Fördertechnik bestimmt. Neben den Anforderungen bezüglich der Leistungssteigerung existieren weitere Forderungen z.B. nach der Artikelbereitstellung in einer definierten Reihenfolge, wodurch die Komplexität von Anlagen durch die Pufferung und Vorsortierung weiter steigt und zumeist Leistungseinbußen hervorgerufen werden.

In der Kommissioniertechnik werden nach dem heutigen Stand der Technik überwiegend zwei Prinzipien angewandt. Zum einen das Prinzip "Mann-zur-Ware", bei dem der Kommissionierer zum entsprechenden Lagergut geführt wird. Dies kann beispielsweise mittels Regalbediengeräten in Hochregallägern, durch Kommissionierstapler entlang von Regalanlagen oder zu Fuß entlang einer Kommissionierstrecke erfolgen.

Zum anderen existiert das Prinzip "Ware-zum-Mann", bei dem das Lagergut über fördertechnische Einrichtungen zu einem stationären Arbeitsplatz gefördert wird, an dem die Ware aus den Lagereinheiten entnommen wird und die Lagereinheiten in der Regel rückgelagert werden.

Durch die steigenden Anforderungen bezüglich der Pickleistung eines einzelnen Kommissionierers ergeben sich nach dem beschriebenen Prinzip "Mann-zur-Ware" Grenzleistungen, die durch die Lagerabmessungen und die dynamischen Eigenschaften des Flurförderzeugs bzw. die Leistung des Kommissionierers begrenzt sind. Durch technische Hilfsmittel wie "pick-by-light"-Anzeigen, kann die Navigation des Bedieners beschleunigt werden. Allerdings werden optische Anzeigen an jedem Kommissionierfach notwendig, was je nach Artikelanzahl und Kommissionierganglänge einen hohen Investitionsaufwand mit sich bringt.

Für das Prinzip "Ware-zum-Mann" sind leistungsfähige Fördermittel notwendig, da die Ladeeinheiten an einem stationären Platz bereitgestellt werden müssen. Durch die beengten Gegebenheiten an einem stationären Arbeitsplatz, die aus Ergonomie- und Leistungsgründen eingehalten werden müssen, bleibt zumeist nicht genügend Fläche, um eine Entzerrung der zu- und abführenden Förderstränge zu bewirken. Dadurch werden hohe Durchsatzleistungen auf einzelnen Strängen hervorgerufen, die an die physikalischen Grenzen heranreichen bzw. zu kostenintensiven Investitionen führen. Hier kann es zu Stauungen der Waren kommen und ein Abreißen des Materialflusses auftreten. Dies führt unweigerlich zu einem Stillstand der Arbeitsvorgänge und somit zu Leistungseinbußen des Gesamtsystems.

Aus der EP 1 136 395 B1 ist gemäß dem Oberbegriff des Anspruchs 1 ein System zum Kommissionieren von in einem Regallager befindlichen Artikeln bekannt, dass mit einer Mehrzahl von parallelen Regalreihen zum Lagern und/oder Puffern von Einheiten zur Aufnahme der Artikel versehen ist, wobei zwischen den Regalreihen abwechselnd gebildete Einlager-Gassen und Pick-Gassen vorgesehen sind und mindestens ein Einlager-Fahrzeug in jeder Einlager-Gasse vorgesehen ist, das zur Aufnahme wenigstens einer Einheit ausgebildet ist und entlang einer jeden Einlager-Gasse zum Einlagern der Einheiten in die Palettenregale verfahrbar ist. Weiter ist mindestens ein Pick-Fahrzeug in jeder Pick-Gasse zum picken der zu kommissionierenden Einheiten vorgesehen, dass entlang jeweils einer der beiden sich gegenüberliegenden, die Pick-Gasse bildenden, Pick-Fronten verfahrbar ist. Des Weiteren sind Pufferplätze, die in den Pick-Gassen zwischen den Verfahrwegen entlang der beiden gegenüberliegenden Pick-Fronten verfahrbaren Pick-Fahrzeuge angeordnet, die zum Zwischenpuffern von und/oder zur Übergabe der zu kommissionierenden Einheiten von einem Pick-Fahrzeug auf einer Seite der Pick-Gasse zu einem Pick-Fahrzeug auf der anderen Seite der Pick-Gasse dienen.

Davon ausgehend liegt der Erfindung die Aufgabe zugrunde, eine Vorrichtung zum Kommissionieren von Waren in einem Warenlager so zu gestalten, dass sehr hohe Kommissionierleistungen in einem System erreichbar sind, das die eingangs beschriebenen Nachteile nicht aufweist.

Zur Lösung der Aufgabe wird erfindungsgemäß vorgeschlagen, ein als Kommissionierplattform ausgebildetes Flurfördermittel zu verwenden und auf der Kommissionierplattform einen Kommissionierarbeitsplatz zu installieren, welcher über physische Schnittstellen mit der rückwärtigen Regalzeile zum Ver- und Entsorgen mit Kommissionier- und Artikelbehältern und über einen Behälteraustausch zwischen dem Kommissionierarbeitsplatz und dem Regal und/oder einer rückwärtig entlang der Regalzeile verfahrbaren Beschickungseinheit zum Ver- und Entsorgen mit Kommissionier- und Artikelbehältern verfügt.

Die Erfindung basiert somit auf einer Kombination der Prinzipe "Mann-zur-Ware" und "Ware-zum-Mann", indem der Arbeitsplatz des Kommissionierers auf der verfahrbaren Kommissionierplattform installiert wird, die entlang einer Regalzeile verfährt und die rückwärtig über eine Beschickungseinheit versorgt wird.

Nach einem besonderen Merkmal der Erfindung ist die rückwärtig entlang der Regalzeile verfahrbare Beschickungseinheit automatisiert und als Regalbediengerät oder Hubbalkensystem ausgebildet.

Es ist sowohl möglich, die Kommissionierplattform schienengebunden, wie auch frei verfahrbar zu gestalten. Im letzteren Fall ist eine größere Flexibilität im Einsatz der Kommissionierplattform möglich, zum Beispiel, wenn durch Umsetzen eine Kommissionierplattform verschiedenen Regalgassen zugeordnet wird.

Nach einem besonders günstigen Merkmal der Erfindung ist der Kommissionierarbeitsplatz der Kommissionierplattform in eine Greifzone und eine Pufferzone unterteilt. In der Greifzone werden die manuellen Kommissioniervorgänge durchgeführt. Die Pufferzone hingegen dient als Wechselplatz zwischen der Kommissionierplattform und dem Regal bzw. als Verweilplatz für einen späteren Wechsel in die Greifzone bzw. in das Regallager.

Erfindungsgemäß verfügt die Kommissionierplattform über mehrere fördertechnische Ebenen, von denen mindestens eine über die physische Schnittstelle mit der rückwärtigen Regalzeile verfügt. Die Anzahl der Stellplätze für die Behälter und die Anzahl der fördertechnischen Ebenen ist variabel zu gestalten, ebenso die Möglichkeit zur Ausgestaltung der Materialflüsse auf der Fördertechnik der Ebene und die Anzahl der Schnittstellen zum Regalsystem, die je nach Leistung des Kommissionierarbeitsplatzes festzulegen ist.

Vorzugsweise ist erfindungsgemäß mindestens eine Ebene zur Übernahme der Artikelbehälter aus dem Regal vorgesehen, mindestens eine Ebene ist zur Aufnahme der Kommissionierbehälter vorgesehen, in die die zu kommissionierenden Waren auftragsrein abgelegt werden und ggf. mindestens eine Ebene ist zum Sortieren und Puffern der zu kommissionierenden Waren vorgesehen. Dabei sind die Aufgaben der vorgesehen Ebenen nach Bedarf tauschbar und/oder vermischbar.

Um die Kapazität des Kommissionierarbeitsplatzes zu vergrößern und die fördertechnischen Abläufe für den Kommissionierer zu vereinfachen, ist mindestens die zum Sortieren und Puffern der zu kommissionierenden Waren vorgesehene Ebene über auf der Kommissionierplattform angeordnete Vertikalumsetzer mit einer oder mehreren der anderen Ebenen verbunden. So lassen sich die momentan im Greifbereich nicht erforderlichen Behälter vorübergehend in eine andere Ebene verlagern, von wo sie bei Bedarf abrufbar sind oder von wo sie entsorgt werden können.

Dazu ist es hilfreich, wenn mindestens eine der Ebenen, vorzugsweise alle Ebenen, mit einem horizontalen Fördersystem zum Transport der Behälter versehen ist. Es können bekannte Fördersysteme verwendet werden, deren Auswahl von den jeweiligen Bedingungen und Gegebenheiten abhängt.

Zur Leistungssteigerung des automatischen Lagersystems kann die Kommissionierplattform an mehreren autonomen Regalgassen, beispielsweise zwischen zwei sich gegenüber stehenden Regalzeilen entlang bewegt werden und der Kommissionierarbeitsplatz von beiden Regalen beschickt und entsorgt werden. Dadurch ergibt sich eine Vervielfachung der Ver- und Entsorgungsleistung.

Der Kommissionierarbeitsplatz auf der Kommissionierplattform kann zur einstufigen oder mehrstufigen Kommissionierung vorgesehen sein. Bei der einstufigen Kommissionierung wird ein Kommissionierbehälter in die Greifzone des Kommissionierarbeitsplatzes gebracht und nacheinander alle benötigten Artikelbehälter der Greifzone zugeführt. Die Kommissionierung erfolgt nacheinander aus den Artikelbehältern, bis der Kommissionierbehälter befüllt ist. Sollten mehrere Kommissionierbehälter zur Erfüllung eines Auftrags benötigt werden, so werden leere Behälter (Nachschubbehälter) in die Greifzone transportiert.

Bei der mehrstufigen Kommissionierung kann ein Artikelbehälter in der Greifzone platziert werden, dessen Artikel in mehrere Aufträge einfließen. Hier kann dieser Artikel in den nacheinander der Greifzone zugeführten Kommissionierbehälter in der richtigen Menge abgelegt werden. Wurde der Artikel vom Kommissionierer allen Aufträgen zugeteilt, so wird ein neuer Artikelbehälter in die Greifzone eingebracht und die notwendigen Kommissionierbehälter werden sukzessive der Greifzone zugeführt. Wenn ein Kommissionierbehälter komplettiert bestückt ist bzw. seinen maximalen Füllgrad erreicht hat, wird dieser in das Regal rückgelagert bzw. auf einen Stetigförderer ausgelagert und dem entsprechenden nächsten Prozessschritt zugeführt. Leerkommissionierte Artikelbehälter können auf dem Fahrzeug verweilen und als neue Kommissionierbehälter verwendet oder in das Regalsystem rückgelagert werden.

Der Arbeitsplatz kann erfindungsgemäß über Unterstützungselemente verfügen, die die manuelle Kommissionieraufgabe beschleunigen. So kann der Kommissionierarbeitsplatz mit elektronisch gesteuerten Anzeigeelementen zur Unterstützung des Kommissionierens versehen sein, z.B. mit der bekannten "Pick-by-light"-Technik.

Die Zielsteuerung der verfahrbaren Kommissionierplattform erfolgt nach der Erfindung automatisch. Nachdem ein Austausch von Behältern zwischen Plattform und Regal erfolgt ist, bewegt sich die Plattform automatisch zum nächsten Übergabeplatz des Regals. Während dieser Fahrzeit kann der Kommissioniervorgang auf der Plattform fortgesetzt werden.

Auch ist die Bereitstellung und Entsorgung der Behälter an den entsprechenden Übergabeplätzen im Regal durch eine übergeordnete Rechnereinheit koordinierbar. Hierbei führen entsprechende Algorithmen dazu, dass die Bereitstellung vorausschauend erfolgt, um die Lastwechsel zu minimieren und die Reihenfolge der Bereitstellung und somit die Fahrzeiten zu optimieren.

Die Kommissionierdaten und Bereitstellungsinformationen sowie ggf. die beabsichtigte Fahrtrichtung der Kommissionierplattform können erfindungsgemäß dem Bediener auf ein mitfahrendes Display übertragen bzw. an die Kommissionieranzeige geleitet werden. Kennt der Kommissionierer die Fahrtrichtung, kann er sich besser an die Beschleunigungs- und Bremsverhältnisse der Kommissionierplattform anpassen.

Die Ausgestaltung des Kommissionierarbeitsplatzes wird unter ergonomischen Gesichtspunkten durchgeführt. Dabei werden die Beschleunigungsrampen der Kommissionierplattform derart eingestellt, dass der Kommissionierer keine Beeinträchtigung erfährt. Der Kommissionierer wird in Fahrtrichtung durch geeignete Schutzmaßnahmen vor den Folgen übermäßiger Beschleunigung (Not-Stop) geschützt.

Die Erfindung weist eine Reihe von Vorteilen gegenüber den bekannten Lösungen auf. Durch die mögliche zeitliche Überlagerung von Kommissioniervorgang, Fahrspiel und Behälterwechsel werden wesentliche Arbeitsvorgänge parallel durchgeführt und können somit zu einer Steigerung der Kommissionierleistung beitragen. Weil die Ver- und Entsorgung der Kommissionierplattform über ein herkömmliches automatisches Lagersystem erfolgen kann, können kostenintensive, aufwändig gestaltete Lagervorzonen entfallen. Die Leistung des Lagersystems verteilt sich über eine Kommissionierfläche entlang der Regalzeile, wo die notwendigen Behälter entlang der angrenzenden Regalzeile in mindestens zwei oder drei Ebenen bereitgestellt werden können. Dadurch wird eine Entzerrung des Materialflusses hervorgerufen; denn der Förderstrom beschränkt sich nicht nur auf wenige Plätze, wie bei einem stationären Arbeitsplatz. Somit verringert sich auch die Komplexität und Leistungsfähigkeit der umgebenden Fördertechnik.

Eine weitere Leistungssteigerung des automatischen Lagersystems mit einer Vervielfachung der Ver- und Entsorgungsleistung ergibt sich, wenn die Kommissionierplattform an mehreren autonomen Regalgassen entlang bewegt wird. Es können auch mehrere Kommissionierplattformen vor einer Regalzeile übereinander aufgeständert angeordnet werden.

Durch die Installation einer Pufferebene auf der Plattform reduziert sich die Frequenz des Behältertauschs zwischen Regalsystem und Plattform. Wird der entsprechende Behälter in naher Zukunft erneut in der Greifzone benötigt, so verweilt sie auf der Plattform und wird in der Pufferebene gespeichert. Dadurch kann die Frequenz des Behältertauschs zwischen den beiden Systemen reduziert werden und eine Leistungssteigerung des Gesamtsystems erfolgen.

Die mitfahrende Pufferebene kann auch zur Sequenzbildung genutzt werden, indem die Behälter aus dem Regalsystem übernommen und zunächst auf der Fördertechnik in eine andere Reihenfolge gebracht werden, bevor sie in die Greifzone wechseln. Die Möglichkeit des Sequenzierens auf der Plattform wirkt sich somit nicht negativ auf die Leistung der automatischen Regalanlage aus und trägt zur Steigerung der Gesamtleistung bei.

Die Pufferebene kann fördertechnisch derart ausgestaltet werden, dass eine Sortierung innerhalb der Ebene erfolgt. Durch die begrenzten Kommissionierplätze in der Greifzone ist es nicht notwendig eine gesamte Regalzeile mit optischen Unterstützungselementen auszugestalten. Durch die Beschränkung auf wenige Kommissionierplätze kann ein Einsparpotenzial geschaffen werden.

Die Erfindung wird nachfolgend anhand eines Ausführungsbeispiels erläutert. Es zeigt in grob vereinfachter Darstellung:
- Figur 1: Eine Systemdarstellung der Erfindung mit einseitiger Regalanbindung,
- Figur 2: eine Seitenansicht des Systems nach Fig. 1.
- Figur 3: eine vergrößerte Darstellung der Kommissionierplattform aus Figur 1 in der Draufsicht und
- Figur 4: eine Anordnung und Darstellung der Materialflüsse auf der Kommissionierplattform nach der Erfindung.

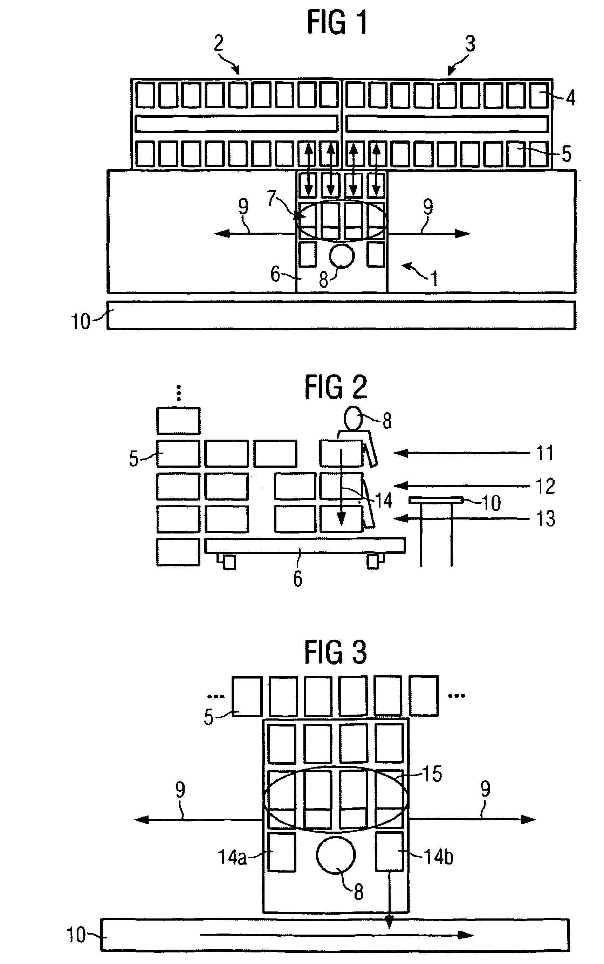

In Figur 1 ist die erfindungsgemäße Kommissioniervorrichtung 1, in ein Lagersystem eingebunden, dargestellt. Erkennbar sind zwei von einer einzigen Kommissioniervorrichtung bediente Lager 2 und 3, die jeweils aus zwei Regalzeilen 4 und 5 bestehen, von denen die Regalzeile 5 von der Kommissioniervorrichtung 1 bedient wird. Die Kommissioniervorrichtung 1 besteht aus der Kommissionierplattform 6 auf der der Kommissionierarbeitsplatz 7 für den Kommissionierer 8 angeordnet ist. Die Kommissionierplattform ist in Pfeilrichtung 9 auf der Kommissionierfläche verfahrbar, vorzugsweise wird sie auf Schienen geführt. Auf der der Regalzeile 5 gegenüberliegenden Seite der Kommissionierfläche ist ein Stetigförderer 10 dargestellt, der die kommissionierten Aufträge entsorgt. Auf der Kommissionierplattform 6 sind verschiedene Behälter als rechteckige Kästen dargestellt, die dort in verschiedenen Förderebenen des Kommissionierarbeitsplatzes abgelegt sind.

Diese insgesamt drei Ebenen sind besser in Figur 2 erkennbar. Die Ebene 1 ist dort mit 11 bezeichnet, in ihr sind mehrere Artikelbehälter in einer Greifzone abgelegt, aus denen der Kommissionierer 8 die zu kommissionierenden Artikel greifen und in Kästen ablegen kann, die in der darunter angeordneten Ebene 12 angeordnet sind. Die Anzahl der zur Verfügung gestellten Artikelbehälter in der oberen Greifebene 11 ist von den Abmessungen der Kommissionierplattform und vom Greifbereiche des Kommissionierers abhängig.

Unterhalb der zweiten Ebene 12 und unmittelbar auf der Kommissionierplattform ist eine dritte Ebene 13 vorgesehen, die zum Puffern und Sortieren der Artikelbehälter genutzt werden kann. Diese Lagerebene 13 ist mit den darüber liegenden Lagerebenen 11 und 12 über eine vertikale Hubeinheit 14 verbunden. Zusätzlich sind die einzelnen Ebenen 11, 12 und 13 mit Fördertechnik ausgerüstet, die das Verschieben der Artikelbehälter und Kommissionierbehälter in den Förderebenen erleichtern. Die Fördertechnik kann beliebig gestaltet sein. Mindestens eine der Ebenen ist unmittelbar mit der Regalzeile 5 verknüpft und erlaubt das Ein- und Auslagern bzw. des Ver- und Entsorgen der Behälter.

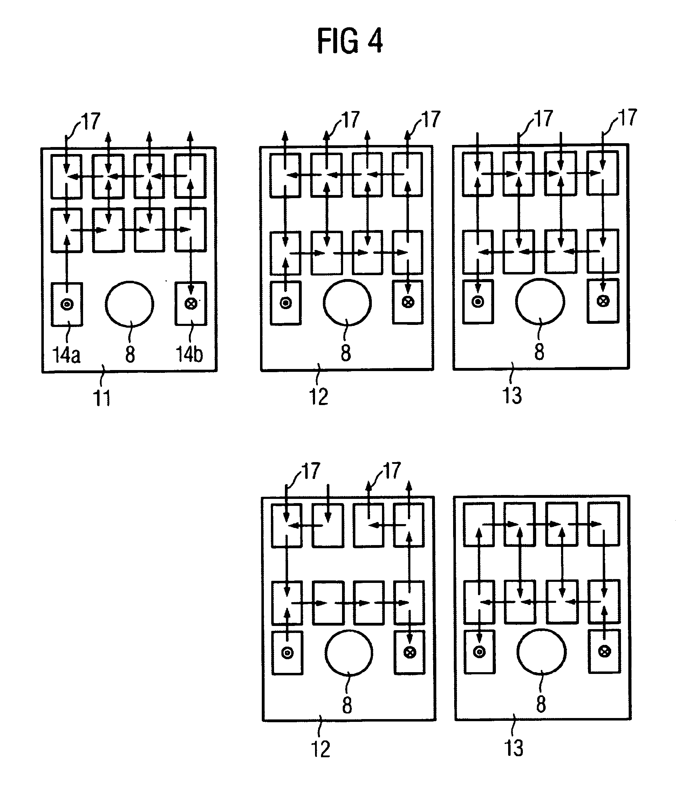

In Figur 3 ist die Greifzone der erfindungsgemäßen Kommissionierplattform bei 15 dargestellt. Alle im Greifbereich des Kommissionierers 8 befindlichen Artikelbehälter werden dort zur Verfügung gestellt, Artikelbehälter in der hinteren Reihe der Kommissionierplattform werden über die vorhandenen (nicht dargestellten) Fördermittel nach einem festgelegten Prinzip (Fig. 4) in die Greifzone, und damit in den Greifbereich des Kommissionierers, transportiert und nach dem Kommissioniervorgang zurückgeführt. Die nicht mehr benötigten Artikelbehälter werden in die Regalzeile 5 entsorgt oder, sofern sie für kurzzeitig spätere Kommissionieraufgaben benötigt werden, in die Pufferzone verbracht. Diese ist, wie in Figur 2 dargestellt, in der untersten Ebene 13 vorgesehen und mit den Vertikalaufzügen 14 erreichbar. In dieser Pufferzone können auch Kommissionieraufträge zwischengelagert werden, die in der zweiten Ebene 12 zusammengestellt worden sind aber noch nicht abgeschlossen sind.

In der Ebene 13 können auch Kommissionierbehälter zwischengespeichert werden, um sie als Sequenz später dem Stetigförderer 10 zu übergeben. Dadurch, dass die Ebenen 11 und 12 mit der Ebene 13 über die Vertikalförderer 14 verbunden sind, können beliebige Kommissionier-, Puffer- und Sortiervorgänge auf der erfindungsgemäßen Kommissionierplattform durchgeführt werden, während das mobile Gerät die Regalzeile abfährt und Behälter aufnimmt und entsorgt.

In Figur 4 ist in schematischer Darstellung der Materialfluss in den einzelnen Ebenen 11, 12 und 13 der Kommissionierplattform 6 bzw. des Kommissionierarbeitsplatzes 7 dargestellt. Die übereinander liegenden Ebenen 11, 12 und 13 sind zur besseren Übersicht nebeneinander dargestellt. In der Darstellung oben links ist die oberste Ebene 11 dargestellt. Die Pfeile lassen erkennen, wohin eine bei 17 aus der Lagerzeile 5 mit Hilfe der in der Ebene 11 vorgesehenen Fördertechnik transportiert werden kann. Erkennbar sind zwei Vertikalhubeinrichtungen 14a und 14b vorgesehen, die Hubeinrichtung 14b ist dafür eingerichtet, einen Behälter in eine der darunter liegenden Ebenen 12 und 13 zu verbringen, während die Hubeinrichtung 14a als Lift Behälter aus der unteren Ebene 13 in eine der darüber angeordneten Ebenen 12 oder 11 transportiert. Rechts der Ebene 11 sind in Figur 4 die Ebenen 12 und 13 dargestellt. Erkennbar sind die Ebenen 12 und 13 dafür eingerichtet, einen direkten Austausch von Behältern mit dem Regal 5 vorzunehmen, wobei aus der Ebene 12 heraus Behälter entsorgt werden können, während das Regal 5 die Ebene 13 mit Behältern versorgen kann. In der Darstellung in der unteren Hälfte der Figur 4 ist eine andere Variante des Materialflusses gezeigt. Hier ist der Austausch mit dem Regal 5 nicht in allen Ebenen möglich, vielmehr ist hier die Ebene 12 dafür eingerichtet, den Austausch von Behältern in zwei Richtungen mit je zwei Lagerplätzen im Regal 5 vorzunehmen, wie an den Pfeilrichtungen erkennbar ist. Ebene 11 verhält sich wie in der oberen Hälfte der Abbildung.

## Patentansprüche

1. Vorrichtung zum Kommissionieren von Waren in einem Warenlager, insbesondere einem Hochregallager, mit Hilfe eines entlang einer Regalzeile verfahrbaren Flurfördermittels, auf dem von einem mitfahrenden Kommissionierer Waren auftragsgebunden aus Artikelbehältern in Kommissionierbehälter zusammenstellbar sind, wobei das Flurfördermittel als Kommissionierplattform (6) ausgebildet ist, auf der ein Kommissionierarbeitsplatz (7) installiert ist, wobei der Kommissionierarbeitsplatz (7) über physische Schnittstellen mit der rückwärtigen Regalzeile (5) und über einen Behälteraustausch zwischen dem Kommissionierarbeitsplatz (7) und dem Regal (5) und/oder einer rückwärtig entlang der Regalzeile verfahrbaren Beschickungseinheit zum Ver- und Entsorgen mit Kommissionierbehälter verfügt,
**dadurch gekennzeichnet, dass**
der Kommissionierarbeitsplatz (7) über physische Schnittstellen mit der rückwärtigen Regalzeile (5) zum Ver- und Entsorgen mit Kommissionier- und Artikelbehälter und über einen Behälteraustausch zwischen dem Kommissionierarbeitsplatz (7) und dem Regal (5) und/oder einer rückwärtig entlang der Regalzeile verfahrbaren Beschickungseinheit zum Ver- und Entsorgen mit Kommissionier- und Artikelbehälter verfügt.

2. Vorrichtung zum Kommissionieren nach Anspruch 1,
**dadurch gekennzeichnet, dass**
die rückwärtig entlang der Regalzeile (5) verfahrbare Beschickungseinheit automatisiert ist und als Regalbediengerät oder Hubbalkensystem ausgebildet ist.

3. Vorrichtung zum Kommissionieren nach Anspruch 1 und 2,
**dadurch gekennzeichnet, dass**
die Kommissionierplattform (6) schienengebunden oder frei verfahrbar ist.

4. Vorrichtung zum Kommissionieren nach den Ansprüchen 1 - 3,
**dadurch gekennzeichnet, dass**
der Kommissionierarbeitsplatz (7) der Kommissionierplattform (6) in eine Greifzone und eine Pufferzone unterteilt ist.

5. Vorrichtung zum Kommissionieren nach den Ansprüchen 1 - 4,
**dadurch gekennzeichnet, dass**
die Kommissionierplattform (6) über mehrere fördertechnische Ebenen (11,12,13) verfügt, von denen mindestens eine über die physische Schnittstellen mit der rückwärtigen Regalzeile (5) verfügt.

6. Vorrichtung zum Kommissionieren nach Anspruch 5,
**dadurch gekennzeichnet, dass**
mindestens eine Ebene (11,12 oder 13) zur Übernahme der Behälter aus dem Regal (5) vorgesehen ist, mindestens eine Ebene (11,12 oder 13) zur Aufnahme der Gebinde vorgesehen ist, in die die zu kommissionierenden Waren auftragsrein abgelegt werden und ggf. mindestens eine Ebene (11,12 oder 13) zum Sortieren und Puffern der zu kommissionierenden Waren bzw. Leerbehälter vorgesehen ist.

7. Vorrichtung zum Kommissionieren nach Anspruch 5 und 6,
**dadurch gekennzeichnet, dass**
die Aufgaben der vorgesehen Ebenen (11,12 und 13) tauschbar und/oder vermischbar sind.

8. Vorrichtung zum Kommissionieren nach einem oder mehreren der Ansprüche 1 bis 7,
**dadurch gekennzeichnet, dass**
mindestens die zum Sortieren und Puffern der zu kommissionierenden Waren vorgesehene Ebene (11,12 oder 13) über auf der Kommissionierplattform (6) angeordnete Vertikalumsetzer (14) mit einer oder mehreren der anderen Ebenen (11,12 oder 13) verbunden ist.

9. Vorrichtung zum Kommissionieren nach einem oder mehreren der Ansprüche 5 bis 8,
**dadurch gekennzeichnet, dass**
mindestens eine der Ebenen (11,12,13), vorzugsweise alle Ebenen (11,12,13), mit einem horizontalen Fördersystem zum Transport der Behälter versehen ist.

10. Vorrichtung zum Kommissionieren nach einem oder mehreren der Ansprüche 1 bis 9,
**dadurch gekennzeichnet, dass**
die Kommissionierplattform (6) zwischen zwei sich gegenüber stehenden Regalzeilen (5) verfahrbar ist und der Kommissionierarbeitsplatz (7) von beiden Regalen beschickbar und entsorgbar ist.

11. Vorrichtung zum Kommissionieren nach einem oder mehreren der Ansprüche 1 bis 10,
**dadurch gekennzeichnet, dass**
der Kommissionierarbeitsplatz (7) auf der Kommissionierplattform (6) zur einstufigen oder mehrstufigen Kommissionierung vorgesehen ist.

12. Vorrichtung zum Kommissionieren nach einem oder mehreren der Ansprüche 1 bis 11,
**dadurch gekennzeichnet, dass**
der Kommissionierarbeitsplatz (7) mit elektronisch gesteuerten Anzeigeelementen zur Unterstützung des Kommissionierens versehen ist.

13. Vorrichtung zum Kommissionieren nach einem oder mehreren der Ansprüche 1 bis 12,
**dadurch gekennzeichnet, dass**
die Zielsteuerung der verfahrbaren Kommissionierplattform (6) automatisiert ist und die Kommissionierplattform (6) nach dem Austausch von Behältern mit dem Regal(5) zum nächsten Übergabeplatz navigierbar ist.

14. Vorrichtung zum Kommissionieren nach einem oder mehreren der Ansprüche 1 bis 13,
**dadurch gekennzeichnet, dass**
die Bereitstellung und Entsorgung der Behälter an den entsprechenden Übergabeplätzen im Regal (5) durch eine übergeordnete Rechnereinheit koordinierbar ist.

15. Vorrichtung zum Kommissionieren nach einem oder mehreren der Ansprüche 1 bis 14,
**dadurch gekennzeichnet, dass**
die Kommissionierdaten und Bereitstellungsinformationen sowie ggf. die beabsichtigte Fahrtrichtung der Kommissionierplattform (6) auf einem Display am Kommissionierarbeitsplatz (7) ausweisbar sind.

16. Vorrichtung zum Kommissionieren nach Anspruch 1,
**dadurch gekennzeichnet, dass**
der Kommissionierarbeitsplatz (7) ergonomisch gestaltet ist.

## Claims

1. Arrangement for the order-picking of goods in a warehouse, and in particular a high-bay warehouse, by means of a floor-travelling carrying means which can be displaced along a row of racking and on which goods from article containers can be assembled into orders in order-picking containers by an order-picker who travels with the carrying means, the floor-travelling carrying means taking the form of an order-picking platform (6) on which an order-picking working station (7) is installed, the order-picking working station (7) has physical interfaces with the rear row of racking (5) and a facility for the exchange of containers between the order-picking working station (7) and the racking (5) and/or between the order-picking working station (7) and a loading unit for supplying and removing order-picking containers, which loading unit can be displaced at the rear along the row of racking, **characterised in that** the order-picking working station (7) has physical interfaces with the rear row of racking (5) for the supply and removal of order-picking containers and article containers, and has a facility for the exchange of containers between the order-picking working station (7) and the racking (5) and/or between the order-picking working station (7) and a loading unit for supplying and removing order-picking containers and article containers, which loading unit can be displaced at the rear along the row of racking.

2. Arrangement for order-picking according to claim 1, **characterised in that** the loading unit which can be displaced at the rear along the row of racking (5) is automated and takes the form of a rack-serving unit or a lifting-beam system.

3. Arrangement for order-picking according to claims 1 and 2. **characterised in that** the order-picking platform (6) is rail-borne or freely displaceable.

4. Arrangement for order-picking according to claims 1 to 3, **characterised in that** the order-picking working station (7) on the order-picking platform (6) is divided into a manual handling zone and a buffer zone.

5. Arrangement for order-picking according to claims 1 to 4, **characterised in that** the order-picking platform (6) has a plurality of levels (11, 12, 13) for movement by feeding of which at least one has the physical interfaces with the rear row of racking (5).

6. Arrangement for order-picking according to claim 5, **characterised in that** at least one level (11, 12 or 13) is intended to take over the containers from the racking (5), at least one level (11, 12 or 13) is intended to receive the holders into which the goods being order-picked are placed as separate individual orders, and at least one level (11, 12 or 13) is intended, if required, for sorting and buffering the goods being order-picked and/or the empty containers.

7. Arrangement for order-picking according to claims 5 and 6, **characterised in that** the tasks for which the levels (11, 12 and 13) are intended can be exchanged or mixed.

8. Arrangement for order-picking according to one or more of claims 1 to 7, **characterised in that** at least the level (11, 12 or 13) intended for sorting and buffering the goods being order-picked is connected via vertical level-changers (14) arranged on the order-picking platform (6) to one or more of the other levels (11, 12 or 13).

9. Arrangement for order-picking according to one or more of claims 5 to 8, **characterised in that** at least one of the levels (11, 12, 13), and preferably all the levels (11, 12, 13), is provided with a horizontal transporting system for transporting the containers.

10. Arrangement for order-picking according to one or more of claims 1 to 9, **characterised in that** the order-picking platform (6) is displaceable between two rows of racking (5) situated opposite one another and the order-picking working station (7) can be loaded and unloaded from both rows of racking.

11. Arrangement for order-picking according to one or more of claims 1 to 10, **characterised in that** the order-picking working station (7) on the order-picking platform (6) is intended for order-picking in a single stage or in a plurality of stages.

12. Arrangement for order-picking according to one or more of claims 1 to 11, **characterised in that** the order-picking working station (7) is provided with electronically controlled display elements to assist the order-picking.

13. Arrangement for order-picking according to one or more of claims 1 to 12, **characterised in that** the steering of the displaceable order-picking platform (6) to a destination is automated and, following the exchange of containers with the racking (5), the order-picking platform (6) can be navigated to the next station for transfer.

14. Arrangement for order-picking according to one or more of claims 1 to 13, **characterised in that** the supply and removal of the containers at the relevant transfer stations in the racking (5) can be co-ordinated by a master computer unit.

15. Arrangement for order-picking according to one or more of claims 1 to 14, **characterised in that** the order-picking data and information on supply and, if required, the intended direction of travel of the order-picking platform (6) can be shown on a display at the order-picking working station (7).

16. Arrangement for order-picking according to claim 1, **characterised in that** the order-picking working station (7) is ergonomically designed.

## Revendications

1. Dispositif de préparation de commandes de marchandises dans un magasin de stockage, notamment dans un magasin à rayonnages de grande hauteur, ledit dispositif comportant un moyen de convoyage au sol déplaçable le long d'une rangée de rayonnages, sur lequel des marchandises peuvent être regroupées, en fonction des commandes, depuis des conteneurs d'articles dans des conteneurs de préparation de commandes par un préparateur de commandes passager, le moyen de convoyage au sol étant conformé en plate-forme de préparation de commandes (6) sur laquelle est installé un poste de préparation de commandes (7), le poste de préparation de commandes (7) disposant d'interfaces physiques avec la rangée de rayonnages arrière (5) et d'un échange de conteneurs entre le poste de préparation de commandes (7) et le rayonnage (5) et/ou une unité de chargement qui est déplaçable à l'arrière le long de la rangée de rayonnages et qui est destinée à amener et retirer des conteneurs de préparation de commandes,
**caractérisé en ce que** le poste de préparation de commandes (7) dispose d'interfaces physiques avec la rangée de rayonnages arrière (5) pour amener et retirer des conteneurs d'articles et de préparation de commandes et d'un échange de conteneurs entre le poste de préparation de commandes (7) et le rayonnage (5) et/ou une unité de chargement qui est déplaçable à l'arrière le long de la rangée de rayonnages et qui est destinée à amener et retirer des conteneurs d'articles et de préparation de commandes.

2. Dispositif de préparation de commandes selon la revendication 1, **caractérisé en ce que** l'unité de chargement déplaçable en arrière le long de la rangée de rayonnages (5) est automatisée et est conformée en gerbeur ou en système à barre de levage.

3. Dispositif de préparation de commandes selon les revendications 1 et 2, **caractérisé en ce que** la plate-forme de préparation de commandes (6) est montée sur rails et est déplaçable librement.

4. Dispositif de préparation de commandes selon les revendications 1 à 3, **caractérisé en ce que** le poste de préparation de commandes (7) de la plate-forme de préparation de commandes (6) est subdivisé en une zone de manutention et une zone de stockage temporaire.

5. Dispositif de préparation de commandes selon les revendications 1 à 4, **caractérisé en ce que** la plate-forme de préparation de commandes (6) dispose de plusieurs plans de manutention (11, 12, 13) dont au moins un dispose des interfaces physiques avec la rangée de rayonnages arrière (5).

6. Dispositif de préparation de commandes selon la revendication 5, **caractérisé en ce que** au moins un plan (11, 12 ou 13) est prévu pour la prise en charge des conteneurs sur le rayonnage (5), au moins un plan (11, 12 ou 13) est prévu pour la réception des emballages dans lesquels les marchandises à préparer pour les commandes sont déposées en fonction des commandes et le cas échéant au moins un plan (11, 12 ou 13) est prévu pour le tri et le stockage temporaire des conteneurs vides ou des marchandises à préparer pour les commandes.

7. Dispositif de préparation de commandes selon les revendications 5 et 6, **caractérisé en ce que** les tâches dévolues aux plans prévus (11, 12 et 13) peuvent être échangées et/ou mixtes.

8. Dispositif de préparation de commandes selon l'une ou plusieurs des revendications 1 à 7, **caractérisé en ce que** au moins le plan (11, 12 ou 13) prévu pour le tri et le stockage temporaire des marchandises à préparer pour les commandes est relié à un ou plusieurs des autres plans (11, 12 ou 13) par des moyens de transfert verticaux (14) disposés sur la plate-forme de préparation de commandes (6).

9. Dispositif de préparation de commandes selon l'une ou plusieurs des revendications 5 à 8, **caractérisé en ce que** au moins un des plans (11, 12, 13), de préférence tous les plans (11, 12, 13), sont dotés d'un système de convoyage horizontal pour le transport des conteneurs.

10. Dispositif de préparation de commandes selon l'une ou plusieurs des revendications 1 à 9, **caractérisé en ce que** la plate-forme de préparation de commandes (6) est déplaçable entre deux rangées de rayonnages (5) placées l'une en face de l'autre et le poste de préparation de commandes (7) peut être amené et retiré par rapport aux deux rayonnages.

11. Dispositif de préparation de commandes selon l'une ou plusieurs des revendications 1 à 10, **caractérisé en ce que** le poste de préparation de commandes (7) est prévu sur la plate-forme de préparation de commandes (6) pour la préparation de commandes à un niveau ou à plusieurs niveau.

12. Dispositif de préparation de commandes selon l'une ou plusieurs des revendications 1 à 11, **caractérisé en ce que** le poste de préparation de commandes (7) est doté d'éléments d'affichage commandés électroniquement pour favoriser la préparation de commandes.

13. Dispositif de préparation de commandes selon l'une ou plusieurs des revendications 1 à 12, **caractérisé en ce que** le système de commande dirigée de la plate-forme de préparation de commandes déplaçable (6) est automatisé et la plate-forme de préparation de commandes (6) est apte à naviguer vers l'emplacement de transfert suivant après l'échange de conteneurs avec le rayonnage (5).

14. Dispositif de préparation de commandes selon l'une ou plusieurs des revendications 1 à 13, **caractérisé en ce que** l'acheminement et le retrait des conteneurs aux emplacements de transfert correspondants dans le rayonnage (5) peuvent être coordonnés par une unité informatique supérieure.

15. Dispositif de préparation de commandes selon l'une ou plusieurs des revendications 1 à 14, **caractérisé en ce que** les données de préparation de commandes et les informations d'acheminement ainsi qu'éventuellement la direction de déplacement prévue de la plate-forme de préparation de commandes (6) peuvent être présentées sur un dispositif d'affichage au niveau du poste de préparation de commandes (7).

16. Dispositif de préparation de commandes selon la revendication 1, **caractérisé en ce que** le poste de préparation de commandes (7) est conformé de façon ergonomique.
